# EUROPÄISCHE PATENTSCHRIFT

(11) **EP 3 614 885 B1**
(45) Veröffentlichungstag und Bekanntmachung des Hinweises auf die Patenterteilung: **28.04.2021**
(21) Anmeldenummer: 18711554.8
(22) Anmeldetag: 15.03.2018
(51) Int. Cl.: A47B 47/02, A47B 96/14, F16B 12/32, F16B 12/20

(54) **RAHMENKONSTRUKTION FÜR EIN REGALSYSTEM**
FRAME CONSTRUCTION FOR A RACK SYSTEM
STRUCTURE DE CADRE POUR SYSTÈME D'ÉTAGÈRES

(30) Priorität: 25.04.2017 DE 202017102414 U
(43) Veröffentlichungstag der Anmeldung: 04.03.2020
(73) Patentinhaber: Anton Schneider GmbH & Co KG, 79341 Kenzingen (DE)
(72) Erfinder: KUGEL, Jasmin, 71154 Nufringen (DE); EBEL, Constantin, 59494 Soest (DE)
(74) Vertreter: Kohler Schmid Möbus Patentanwälte
(86) Internationale Anmeldenummer: PCT/EP2018/056553
(87) Internationale Veröffentlichungsnummer: WO 2018/197101

(56) Entgegenhaltungen:
- EP-A1- 0 864 273
- WO-A2-01/25664
- GB-A- 1 059 220
- US-A- 5 520 292
- US-A1- 2004 001 739
- US-A1- 2006 086 684

## Beschreibung

Die Erfindung betrifft eine Rahmenkonstruktion, insbesondere für ein Regalsystem, mit zwei vertikalen Säulen und mit mehreren an den beiden Säulen befestigten, horizontalen Traversen.

Derartige Rahmenkonstruktionen sind hinlänglich bekannt.

Aus der US 2006/0086684 A1 ist eine Pfostenstruktur bekannt, die mehrere axiale Längsnuten aufweist. Die zwei einander gegenüberliegenden Nutflanken der Längsnuten weisen jeweils einen Hinterschnitt auf. Ein U-Profil wird mit seinen beiden federnden Nutschenkeln voran in die Längsnut eingefügt, bis die federnden Nutschenkel hinter dem Hinterschnitt verrasten. Der Mittelschenkel des U-Profils weist eine Gewindebohrung auf, in die eine Schraube bis zwischen die beiden federnden Nutschenkel eingeschraubt wird. Dadurch sind die beiden federnden Nutschenkel gegen Zusammendrücken und damit im Hinterschnitt gesichert. Das U-Profil ist mit Stützelementen versehen, um daran Regalböden zu befestigen.

EP 0 864 273 A1 offenbart eine Rahmenkonstruktion mit mehreren Pfosten, und GB 1 059 220 A offenbart eine vertikale Säule mit einer Längsnut, in die eine Lochrasterleiste mit mehreren Löchern eingeschoben wird.

Der Erfindung liegt die Aufgabe zugrunde, eine leicht zusammenbaubare Rahmenkonstruktion anzugeben, bei der die Höhen der einzelnen Traversen in äquidistanten Maßen vorgegeben sind.

Diese Aufgabe wird erfindungsgemäß durch eine Rahmenkonstruktion mit den Merkmalen von Anspruch 1 gelöst.

Hauptbestandteile der erfindungsgemäßen Rahmenkonstruktion sind Säulen- und Traversenhohlprofile (z.B. aus Metall), die mit speziellen Traversenverbindern (z.B. aus Kunststoff) zu einem Rahmen zusammengefasst werden. Die Traversenverbinder können im Zusammenspiel mit den Profilen sowohl als feste, als auch schnell lösbare Verbindung ausgelegt werden. Eine spezielle Lochrasterleiste, die in dem Säulenhohlprofil eingehaust ist, ermöglicht eine Positionierung der Traversen in definierten Höhenabständen. Vorzugsweise weisen die Lochrasterleisten in äquidistanten Abständen Löcher auf. Die Traversenverbinder bilden immer eine lösbare, clipsbare, ineinandersteckbare Verbindung, die durch Erweiterung mit einer Spanneinheit zu einer festen kraftschlüssigen Verbindungsgruppe wird. Die festverbundene Funktionsgruppe ermöglicht den Aufbau eines Basisrahmens, in dem die clipbaren Elemente wiederum eingeführt werden können.

Besonders bevorzugt sind die Lochrasterleisten aus transluzentem Material, insbesondere aus Kunststoff, gebildet, wobei rückseitig an den Lochrasterleisten jeweils ein LED-Streifen angeordnet, insbesondere angeklebt oder in einer C-Nut der Lochrasterleiste gefasst ist. Vorzugsweise sind die Lochrasterleisten jeweils um etwa die Höhe der obersten Traverse kürzer als die Säulenhohlprofile. Das von den LEDs des LED-Streifens abgestrahlte Licht kann durch die lichtdurchlässigen Lochrasterleisten hindurchscheinen, um so eine Ambientebeleuchtung der Rahmenkonstruktion zu ermöglichen.

Bei bevorzugten Ausführungen der Erfindung sind mindestens die unterste und die oberste Traverse an den Säulen fest verbunden, und eine mittlere Traverse ist an den Säulen hängend gehalten.

Vorzugsweise ist das innere Verbinderteil stirnseitig am Traversenhohlprofil mittels einer in einen Schraubkanal des Traversenhohlprofils eingeschraubten Schraube befestigt.

Besonders bevorzugt ist vorgesehen, dass ein Zugbolzen durch die beiden Verbinderteile hindurch in einen Längskanal des Traversenhohlprofils eingesteckt ist und außen am äußeren Verbinderteil mit einem Bolzenkopf anliegt, welcher jeweils einen den beiden Längsrippen vorgeordneten Längsabsatz des Säulenhohlprofils hintergreift. Mittels eines im Traversenhohlprofil querverlaufenden, insbesondere eingeschraubten Spannelements ist der Zugbolzen weiter in den Längskanal einziehbar ist, um die Traverse mit der jeweiligen Säule zu verspannen. Zu diesem Zweck kann das Spannelement in eine Querbohrung des Zugbolzens eingreifen, wobei das Spannelement und/oder die Querbohrung derart schräg zueinander ausgebildet sind, dass beim Eingreifen der Zugbolzen am Spannelement zentriert und dadurch angezogen wird.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: eine aus zwei vertikalen Säulen und mehreren horizontalen Traversen zusammengebaute, erfindungsgemäße Rahmenkonstruktion für ein Regalsystem in einer perspektivischen Ansicht;
- Fign. 2a, 2b: ein Säulenhohlprofil der in Fig. 1 gezeigten Säulen in perspektivischer Ansicht (Fig. 2a) und im Querschnitt (Fig. 2b);
- Fign. 3a, 3b: ein Traversenhohlprofil der in Fig. 1 gezeigten Traversen in perspektivischer Ansicht (Fig. 3a) und im Querschnitt (Fig. 3b);
- Fign. 4a, 4b: den Aufbau einer in Fig. 1 gezeigten, mittleren Traverse (Fig. 4a) und den Aufbau der in Fig. 1 gezeigten, untersten und obersten Traverse (Fig. 4b);
- Fig. 5: ein inneres Verbinderteil eines in Fign. 4a, 4b gezeigten Traversenverbinders in einer perspektivischen Ansicht;
- Fign. 6a, 6b: ein äußeres Verbinderteil eines in Fign. 4a, 4b gezeigten Traversenverbinders in zwei unterschiedlichen perspektivischen Ansichten; und
- Fign. 7a-7j: die einzelnen Montageschritte zum Zusammenbau der in Fig. 1 gezeigten Rahmenkonstruktion.

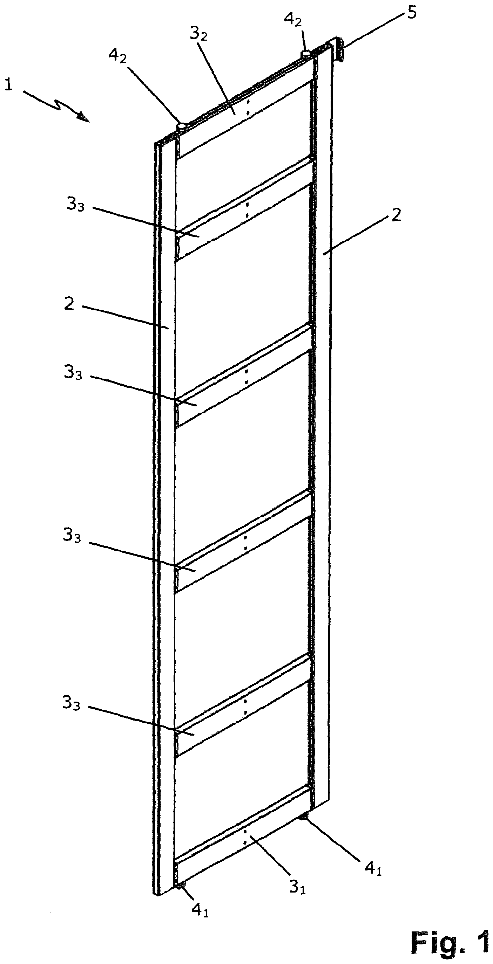

Die in **Fig. 1** gezeigte Rahmenkonstruktion **1** dient beispielsweise als Seitenwand eines Regalsystems und umfasst zwei vertikale Säulen **2** und mehrere horizontale Traversen **3₁**, **3₂**, **3₃**, die an den beiden vertikalen Säulen 2 befestigt sind. Die unterste und die oberste Traverse 3₁, 3₂ sind an den Säulen 2 festgeschraubt und die mittleren Traversen 3₃ an den Säulen 2 eingehängt. An der untersten Traverse 3₁ sind untere Stellfüße **4**₁, mit denen die Rahmenkonstruktion 1 auf einem Boden aufsteht, und an der obersten Traverse 3₂ optional obere Stellfüße **4**₂ für eine Decke- zu Bodenverspannung der Rahmenkonstruktion 1 befestigt. An der in Fig. 1 rechten Säule 2 ist auf Höhe der obersten Traverse 3₂ noch ein Winkel 5 für eine Anbindung der Rahmenkonstruktion 1 an eine Wand befestigt.

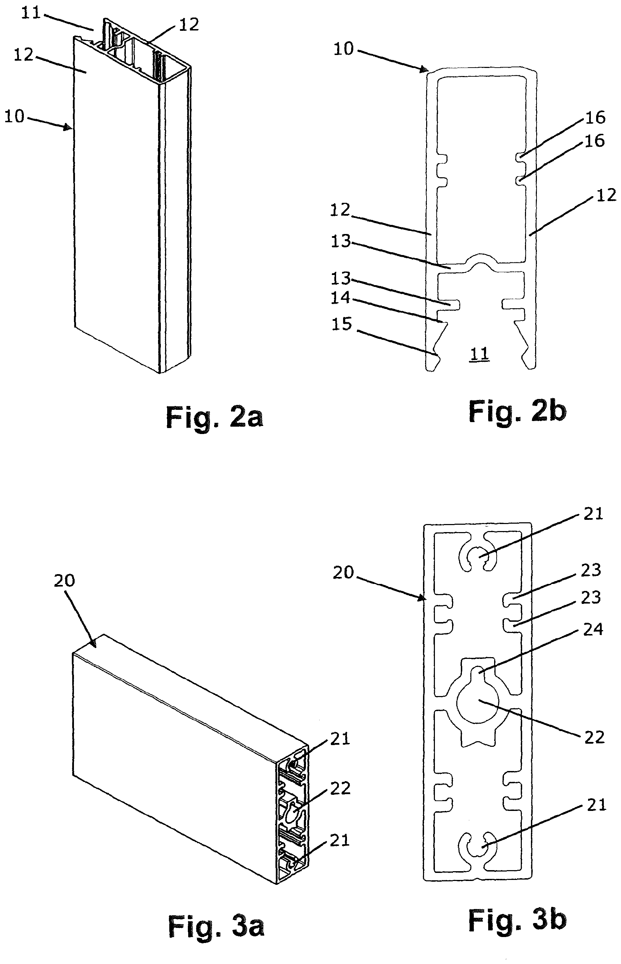

Wie in **Fign. 2a, 2b** gezeigt, sind die Säulen 2 jeweils durch ein stirnseitig offenes, rechteckiges Säulenhohlprofil **10** mit einer Längsnut **11** gebildet, deren zwei einander gegenüberliegende Nutschenkel **12** innenseitig jeweils zwei vordere Längsrippen **13** aufweisen. Die jeweils hintere der beiden vorderen Längsrippen 13 der beiden Nutschenkel 12 ist durch eine Querwand der Säulen-Hohlprofils 10 ausgebildet. Die beiden Nutschenkel 12 weisen weiterhin innenseitig jeweils einen den beiden Längsrippen 13 vorgeordneten Längsabsatz **14**, eine dem Längsabsatz 14 vorgeordnete Raststufe **15** sowie zwei den vorderen Längsrippen 13 nachgeordnete, hintere Längsrippen **16** auf. Bei Bedarf kann zwischen die beiden hinteren Längsrippen 16 der beiden Nutschenkel 12 ein Flachstahlprofil zur Verstärkung gegen Profildurchbiegung eingeschoben werden. Das Säulenhohlprofil 10 ist vorzugsweise ein Strangpressprofil aus z.B. Aluminium.

Wie in **Fign. 3a, 3b** gezeigt, sind die Traversen 3₁, 3₂, 3₃ jeweils durch ein stirnseitig offenes, rechteckiges Traversenhohlprofil **20** gebildet, das im Inneren einen oberen und einen unteren Schraubkanal **21**, einen zwischen den Schraubkanälen 21 angeordneten, zentralen Längskanal **22** sowie mehrere Wandverdickungen 23 für optionale Querprofilbohrungen aufweist. Das Traversenhohlprofil 20 ist vorzugsweise ebenfalls ein Strangpressprofil aus z.B. Aluminium.

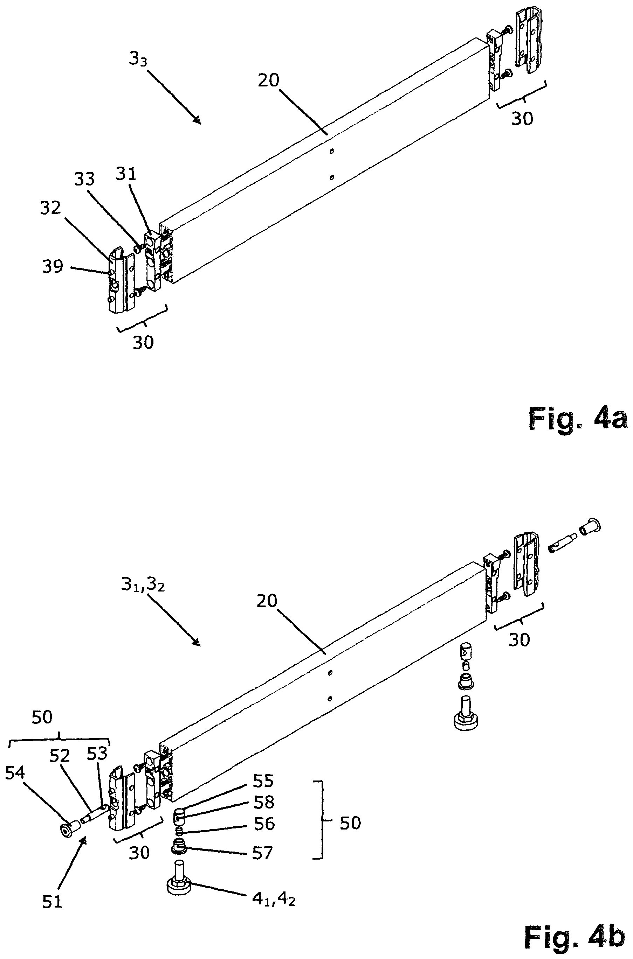

Wie in **Fig. 4a** gezeigt, ist eine mittlere Traverse 3₃ der Rahmenkonstruktion 1 aus dem Traversenhohlprofil 10 und zwei jeweils stirnseitig am Traversenhohlprofil 10 befestigten Traversenverbindern **30** zusammengebaut. Die Traversenverbinder 30 sind baugleich und zweiteilig durch ein inneres Verbinderteil 31 und ein äußeres Verbinderteil **32** gebildet. Das innere Verbinderteil 31 ist einerseits mittels zweier Schrauben **33**, welche in die Schraubkanäle 21 des Traversenhohlprofils 20 eingeschraubt sind, stirnseitig an das Traversenhohlprofil 20 angeschraubt und andererseits in das äußere Verbinderteil 32 von oben eingesteckt bzw. eingehängt.

Von der mittleren Traverse 3₃ unterscheidet sich die in **Fig. 4b** gezeigte, unterste oder oberste Traverse 3₁, 3₂ lediglich durch eine zusätzliche, mehrteilige Spanneinheit **50**. Die Spanneinheit 50 umfasst einen zweiteiligen Zugbolzen **51**, der aus einem Gewindebolzen **52** mit Querbohrung **53** und einer aufgeschraubten Hülsenmutter **54** zusammengesetzt ist, sowie ein Führungsgehäuse **55** für den Zugbolzen 51, einen darin eingeschraubten Gewindestift **56** und eine Einschlagmuffe **57** mit Gewinde für einen Stellfuß 4₁, 4₂.

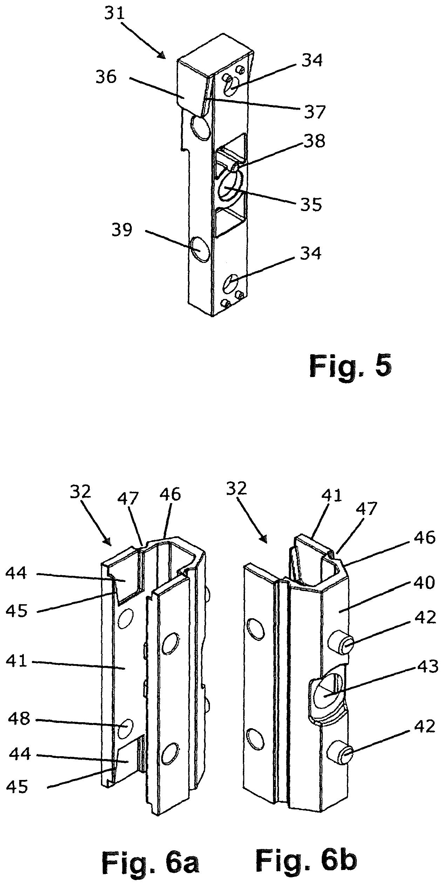

Das in **Fig. 5** gezeigte innere Verbinderteil 31 ist ein quaderförmiges Spritzgussteil aus Kunststoff und weist ein oberes und ein unteres Durchgangsloch **34** für die Schrauben 33, ein dazwischen angeordnetes, zentrales Durchgangsloch **35** und auf Höhe des oberen Durchgangslochs 34 beidseitig jeweils einen seitlich vorstehenden Steck- bzw. Einhängevorsprung **36** mit einer schrägen Seitenkante 37 auf. Ein Zapfen **38** am zentralen Durchgangsloch 35 sorgt zusammen mit einer zugehörigen Kontur 24 des Längskanals 22 für eine verdrehsichere Montage des inneren Verbinderteils 31 am Traversenhohlprofil 20.

Das in **Fign. 6a, 6b** gezeigte äußere Verbinderteil 32 ist ein Spritzgussteil aus Kunststoff und U-förmig mit einem Mittelschenkel **40** und zwei Seitenschenkeln **41** ausgebildet. Der Mittelschenkel 41 weist außenseitig einen oberen und einen unteren Zapfen **42** und dazwischen ein zentrales Durchgangsloch **43** auf. Die beiden Seitenschenkel 41 weisen innenseitig jeweils eine nach oben offene, obere und eine nach unten offene, untere Steck- bzw. Hängeaufnahme **44** mit einer schrägen Seitenkante **45** auf. Der Mittelschenkel 40 ist schmaler als der Abstand der beiden Seitenschenkel 41 und geht jeweils über eine Schrägfläche **46** in die beiden Seitenschenkel 41 über, wobei zwischen den Schrägflächen 46 und den Seitenschenkeln 41 jeweils eine außenseitige Raststufe **47** verläuft. Das äußere Verbinderteil 32 ist spiegelsymmetrisch bezüglich der durch das zentrale Durchgangsloch 43 gehenden Quermittelebene.

Die inneren Verbinderteile 31 können mit ihren Einhängevorsprüngen 36 in die oberen Hängeaufnahmen 44 der äußeren Verbinderteile 32 eingehängt werden, wobei die hierbei miteinander zusammenwirkenden, schrägen Seitenkanten 37, 46 ein Anziehen der beiden Verbinderteile 31, 32 in Längsrichtung des Traversenhohlprofils 20 bewirken.

Wie in Fig. 4b gezeigt, wird über eine nicht gezeigte Sacklochbohrung in der Unterseite des Traversenhohlprofils 10 das Führungsgehäuse 55 in das Traversenhohlprofil 10 eingesetzt und so ausgerichtet, dass eine Führungsbohrung **58** des Führungsgehäuses 55 koaxial zum Längskanal 22 des Traversenhohlprofils 10 verläuft. Anschließend wird die Einschlagmuffe 57 in die Bohrung eingeschlagen und der Gewindestift 56 in die Einschlagmuffe 57 eingeschraubt. Nachdem die inneren Verbinderteile 31 in die äußeren Verbinderteile 32 eingehängt worden, wird der Zugbolzen 51 durch die zentralen Durchganglöcher 35, 43 durch- und in die Führungsbohrung 58 des Führungsgehäuses 55 eingesteckt, bis der Zugbolzen 51 mit seinem Bolzenkopf, nämlich mit dem Hülsenrand der Hülsenmutter 54, außen am Mittelschenkel 40 des äußeren Verbinderteils 32 anliegt. Der Bolzenkopf steht dabei beidseitig über den Mittelschenkel 40 vor. Abschließend wird der Gewindestift 56 soweit eingeschraubt, dass er mit seinem konischen Stiftende geringfügig in die Querbohrung 53 eingreift und dadurch den Zugbolzen 51 im Führungsgehäuse 55 sichert. Die Spanneinheit 50 ist nun am Traversenhohlprofil 20 fixiert, und die Vormontage der untersten und obersten Traverse 3₁, 3₂ ist abgeschlossen.

Nachfolgend werden die einzelnen Montageschritte beim Zusammenbau der Rahmenkonstruktion 1 beschrieben.

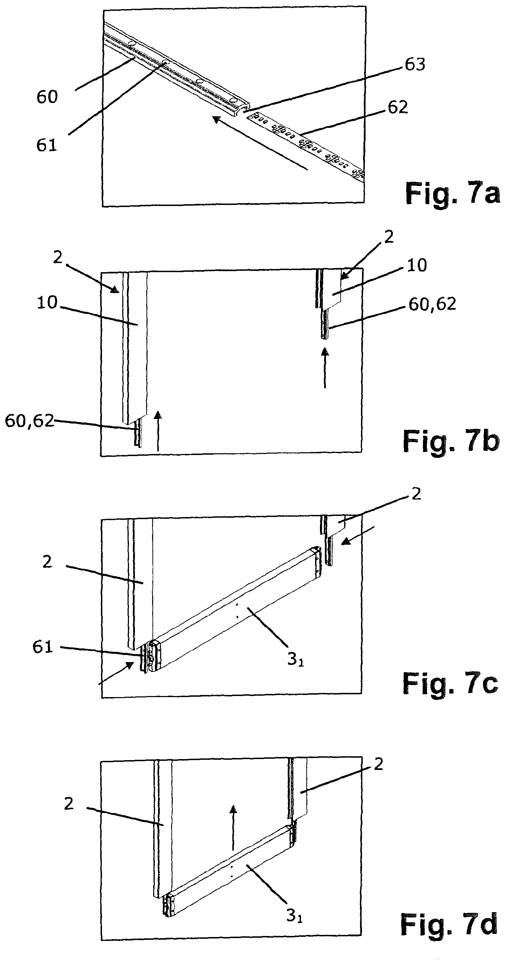

Die Säulenhohlprofile 10, die Traversenhohlprofile 20 und zwei Lochrasterleisten **60** (Fig. 7a) werden auf Länge konfektioniert. Die Lochrasterleisten **60** weisen in äquidistanten Abständen, z.B. im üblichen Möbelraster von 32 mm, Löcher 61 auf. Ein LED-Streifen **62** wird in eine C-Nut **63** der Lochrasterleiste 60 eingeschoben und ist darin klemmend gehalten (**Fig. 7a****)**. Die Lochrasterleisten 60 und die LED-Streifen 62 sind jeweils um etwa die Höhe der obersten Traverse 3₂ kürzer als die Säulenhohlprofile 10. Die Lochrasterleisten 60 sind aus transluzentem Kunststoff und somit lichtdurchlässig für das vom LED-Streifen 60 abgestrahlte Licht. Die Kabel der LED-Streifen 62 sind nicht dargestellt.

Die mit den LED-Streifen 62 hinterlegten Lochrasterleisten 60 werden in die stirnseitig offenen Säulenhohlprofile 10 jeweils zwischen den beiden Längsrippen 13 eingeschoben (**Fig. 7b**), um die Säulen 2 auszubilden. Dabei stehen die Lochrasterleisten 60 um etwa die Höhe einer Traverse nach unten aus dem Säulenhohlprofil 10 vor.

Die vormontierte unterste Traverse 3₁ wird zwischen die nach unten vorstehenden Lochrasterleisten 60 positioniert, und anschließend werden die beiden Säulen 2 zusammengeschoben, bis die Zapfen 42 der äußeren Verbinderteile 32 in die Löcher 61 der Lochrasterleisten 60 eingesteckt sind (**Fig. 7c**).

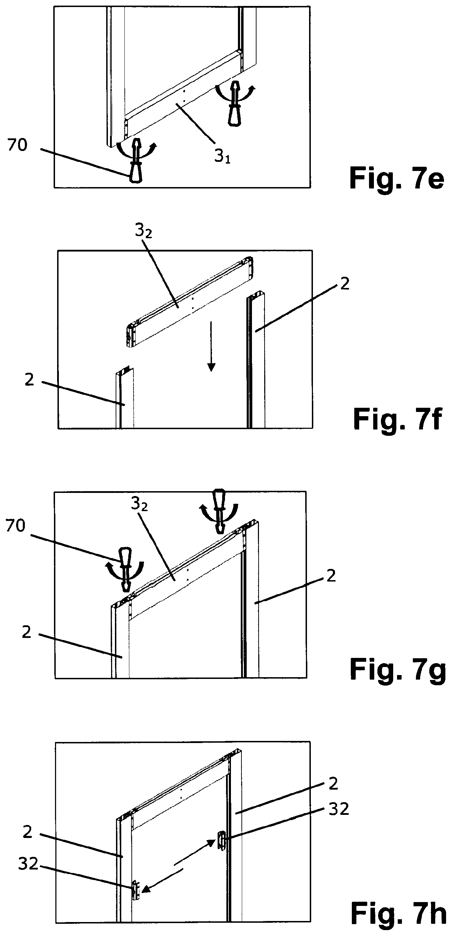

Dieser Steckverbund von unterster Traverse 3₁ und Lochrasterleisten 60 wird in das Säulenhohlprofil 10 eingeschoben, bis die Traversenunterkante bündig mit dem Säulenhohlprofil 10 abschließt (**Fig. 7d**). Dabei tritt der Bolzenkopf des Zugbolzens 51 in den Längskanal 11 des Säulenhohlprofils 10 ein und hintergreift mit seinen beiden übersehenden Seiten die Längsabsätze 14 des Säulenhohlprofils 10. Außerdem hintergreift die Raststufe 47 des äußeren Verbinders 32 die Raststufe 15 des Säulenhohlprofils 10. Abschließend wird ein Schraubendreher **70** durch die Einschlagmuffen 57 geführt, und die vormontierten Gewindestifte 56 werden in die Querbohrungen 53 eingeschraubt (**Fig. 7e**). Dabei wird der Zugbolzen 51 mit seiner Querbohrung 53 auf dem konischen Stiftende des Gewindestifts 56 zentriert. Dadurch werden der Bolzenkopf und der Gewindestift 56 aufeinanderzu gezogen und somit das vom Zugbolzen 51 hintergriffene Säulenhohlprofil 10 und das Traversenhohlprofil 10 aneinander festgespannt. Zusätzlich oder alternativ kann die Querbohrung 53 auch einen mit dem Gewindestift 56 zusammenwirkenden Einführkonus aufweisen.

Da die Lochrasterleiste 60 aufgrund ihrer kürzeren Länge nicht bis zur Oberkante der Säulen 2 reicht, kann die vormontierte oberste Traverse 3₂ von oben zwischen die beiden Säulen 2 eingefügt werden (**Fig. 7f**), bis sie mit ihrer Oberkante bündig mit den Säulen 2 abschließt. Die oberste Traverse 3₂ greift somit nicht in die Lochrasterleiste 60 und ist nicht an das Höhenrastmaß gebunden. Die oberste Traverse 3₂ wird wie die unterste Traverse 3₁ mit Hilfe des Schraubendrehers 70 befestigt (**Fig. 7g**).

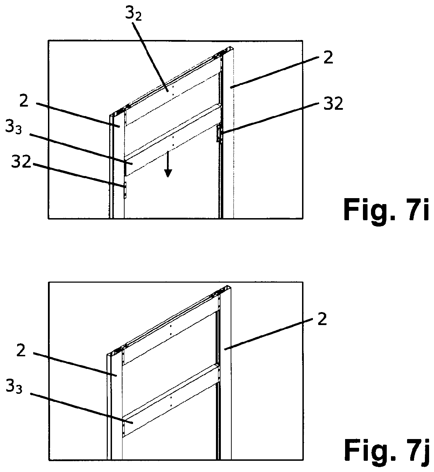

Zum Befestigen einer mittleren Traverse 3₃ werden zunächst ihre beiden äußeren Verbinderteile 3₂ jeweils in die Längsnut 11 der Säulenhohlprofile 10 eingeclipst und dabei gleichzeitig die Zapfen 42 der äußeren Verbinderteile 32 in die Löcher 61 der Lochrasterleisten 60 eingesteckt (**Fig. 7h**). Beim Einclipsen federn die beiden Seitenschenkel 41 des äußeren Verbinderteils 32 leicht nach innen, bis ihre Raststufen 47 hinter den Raststufen 15 des Säulenhohlprofils 10 verrastet sind. Durch Zusammendrücken der beiden Seitenschenkel 41 lassen sich die äußeren Verbinderteile 32 wieder entfernen und neu positionieren. Abschließend wird die mittlere Traverse 3₃ zwischen den Säulen 2 positioniert (**Fig. 7i**) und mit ihren inneren Verbinderteilen 31 von oben in die beiden verrasteten äußeren Verbinderteile 32 eingehängt (**Fig. 7j**). Die Lochrasterleisten 60 bilden die Lastabtragsorgane der mittleren Traversen 3₃. Da nicht die abgeschnittene Unterkante, sondern die Löcher 61 der Lochrasterleiste 60 die Höhenreferenz bilden, ist eine hohe Toleranz beim Zuschnitt der Lochrasterleiste möglich.

Der Innenraum der äußeren Verbinderteile 32 ist durch die eingehängten inneren Verbinderteile 31 ausgefüllt, so dass die Seitenschenkel 41 der äußeren Verbinderteile 32 nicht nach innen ausgelenkt und somit die äußeren Verbinderteile 32 nicht von den Säulen 2 gelöst werden können. Schnittstellenlöcher für querverlaufende Befestigungselemente (z.B. Querschrauben) von Anbauelementen (z.B. Möbelbeschläge) führen durch das Säulenhohlprofil 10 und die Traversenverbinder 31, 32. In Fig. 5 sind die Schnittstellenlöcher **39** des inneren Verbinderteils 31 und in Fign. 6a, 6b die Schnittstellenlöcher **48** des äußeren Verbinderteils 32 gezeigt. Sobald ein Anbauelement befestigt ist, gibt es eine Art "Verstiftung" von Säulenhohlprofil 10 und Traversenverbindern 31, 32 zueinander, und ein Lösen der mittleren Traverse 33 ist ohne Demontage der Anbauelemente nicht mehr möglich.

Das von den LED-Streifen 62 durch die Lochrasterleisten 60 hindurch abgestrahlte Licht tritt aus den Längsnuten 11 der Säulenhohlprofile 10 aus und sorgt für eine "Ambientebeleuchtung" der Rahmenkonstruktion 1. Die Wärmeableitung von den LED-Streifen 62 erfolgt nach hinten an die Säulenhohlprofile 10.

## Patentansprüche

1. Rahmenkonstruktion (1), insbesondere für ein Regalsystem, aufweisend:
- zwei insbesondere vertikale Säulen (2) jeweils in Form eines insbesondere rechteckigen Säulenhohlprofils (10) mit einer Längsnut (11), deren zwei einander gegenüberliegende Nutschenkel (12) innenseitig jeweils zwei Längsrippen (13) aufweisen, zwischen denen eine Lochrasterleiste (60) in das Säulenhohlprofil (10) eingefügt ist, und
- mehrere an den beiden Säulen (2) befestigte, insbesondere horizontale Traversen (3₁, 3₂, 3₃) jeweils in Form eines insbesondere rechteckigen Traversenhohlprofils (20), an dem jeweils stirnseitig ein Traversenverbinder (30) befestigt ist,
wobei die Traversenverbinder (30) jeweils zweiteilig durch ein inneres und ein äußeres Verbinderteil (31, 32) gebildet sind, wobei das innere Verbinderteil (31) stirnseitig am Traversenhohlprofil (20) befestigt und in das äußere Verbinderteil (32) eingesteckt, insbesondere eingehängt ist und das äußere Verbinderteil (32) mit mindestens einem Zapfen (42) in eines der Löcher (61) der Lochrasterleisten (60) eingreift, und
wobei die beiden Nutschenkel (12) des Säulenhohlprofils (10) und das äußere Verbinderteil (32) jeweils eine miteinander zusammenwirkende Clipskontur (15, 46, 47) zum Einclipsen des äußeren Verbinderteils (32) in die Längsnut (11) und/oder zum Verschieben des äußeren Verbinderteils (32) entlang der Längsnut (11) aufweisen.

2. Rahmenkonstruktion nach Anspruch 1, **dadurch gekennzeichnet, dass** die Lochrasterleisten (60) aus transluzentem Material, insbesondere aus Kunststoff, gebildet sind und dass rückseitig an den Lochrasterleisten (60) jeweils ein LED-Streifen (62) angeordnet ist, insbesondere angeklebt oder in einer C-Nut (63) der Lochrasterleiste (60) angeordnet ist.

3. Rahmenkonstruktion nach Anspruch 1 oder 2, **dadurch gekennzeichnet, dass** die Lochrasterleisten (60) in äquidistanten Abständen Löcher (61) aufweisen.

4. Rahmenkonstruktion nach einem der vorhergehenden Ansprüche, **dadurch gekennzeichnet, dass** die Lochrasterleisten (60) jeweils um etwa die Höhe der obersten Traverse (3₂) kürzer als die Säulenhohlprofile (10) sind.

5. Rahmenkonstruktion nach einem der vorhergehenden Ansprüche, **dadurch gekennzeichnet, dass** mindestens die unterste und die oberste Traverse (3₁, 3₂) an den Säulen (2) fest verbunden sind.

6. Rahmenkonstruktion nach einem der vorhergehenden Ansprüche, **dadurch gekennzeichnet, dass** eine mittlere Traverse (3₃) an den Säulen (2) hängend gehalten ist.

7. Rahmenkonstruktion nach einem der vorhergehenden Ansprüche, **dadurch gekennzeichnet, dass** das innere Verbinderteil (31) stirnseitig am Traversenhohlprofil (20) mittels einer in einen Schraubkanal (21) des Traversenhohlprofils (20) eingeschraubten Schraube (33) befestigt ist.

8. Rahmenkonstruktion nach nach einem der vorhergehenden Ansprüche, **dadurch gekennzeichnet, dass** die beiden Verbinderteile (31, 32) jeweils eine schräg zur Steckrichtung verlaufende Anzugskontur (37, 46) aufweist, um die ineinander gesteckten Verbinderteile (31, 32) quer zur Steckrichtung aneinander anzuziehen.

9. Rahmenkonstruktion nach einem der vorhergehenden Ansprüche, **dadurch gekennzeichnet, dass** ein Zugbolzen (51) durch die beiden Verbinderteile (31, 32) hindurch in einen Längskanal (22) des Traversenhohlprofils (20) eingesteckt ist und außen am äußeren Verbinderteil (32) mit einem Bolzenkopf anliegt, welcher jeweils einen den beiden Längsrippen (13) vorgeordneten Längsabsatz (14) des Säulenhohlprofils (10) hintergreift und mittels eines im Traversenhohlprofil (20) querverlaufenden, insbesondere eingeschraubten Spannelements (56) weiter in den Längskanal (22) einziehbar ist, um die Traverse (3₁, 3₂) mit der jeweiligen Säule (2) zu verspannen.

10. Rahmenkonstruktion nach Anspruch 9, **dadurch gekennzeichnet, dass** das Spannelement (56) in eine Querbohrung (53) des Zugbolzens (51) eingreift und dass das Spannelement (56) und/oder die Querbohrung (53) derart schräg zueinander ausgebildet sind, dass beim Eingreifen der Zugbolzen (51) am Spannelement (56) zentriert und dadurch angezogen wird.

11. Rahmenkonstruktion nach einem der vorhergehenden Ansprüche, **dadurch gekennzeichnet, dass** die Traversenverbinder (30) Schnittstellenlöcher (39, 48) für querverlaufende Befestigungselemente von Anbauelementen aufweisen.

12. Rahmenkonstruktion nach einem der vorhergehenden Ansprüche, **dadurch gekennzeichnet, dass** die Säulenhohlprofile (10) und/oder die Traversenhohlprofile (20) Strangpressprofile, insbesondere aus Metall, sind.

13. Rahmenkonstruktion nach einem der vorhergehenden Ansprüche, **dadurch gekennzeichnet, dass** die Traversenverbinder (30) aus Kunststoff gebildet sind.

## Claims

1. A frame construction (1), in particular for a rack system, comprising:
- two in particular vertical columns (2) each in the form of an in particular rectangular hollow profiled column element (10) having a longitudinal groove (11), the two groove legs (12) of which lying opposite each other each have on the inside two longitudinal ribs (13), between which a hole pattern strip (60) is inserted into the hollow profiled column element (10), and
- a plurality of in particular horizontal crossbeams (3₁, 3₂, 3₃), which are fastened to the two columns (2), each in the form of an in particular rectangular hollow profiled crossbeam element (20), crossbeam connectors (30) being fastened to each end face of the hollow profiled crossbeam element (20),
wherein the crossbeam connectors (30) are each formed in two parts by an inner and an outer connector part (31, 32), wherein the inner connector part (31) is fastened to the end face of the hollow profiled crossbeam element (20) and is plugged, in particular hung, into the outer connector part (32) and the outer connector part (32) engages, with at least one pin (42), in one of the holes (61) of the hole pattern strips (60), and
wherein the two groove legs (12) of the hollow profiled column element (10) and the outer connector part (32) each have a mutually interacting clip contour (15, 46, 47) for clipping of the outer connector part (32) into the longitudinal groove (11) and/or for displacement of the outer connector part (32) along the longitudinal groove (11).

2. The frame construction as claimed in claim 1, **characterized in that** the hole pattern strips (60) are formed of translucent material, in particular of plastic, and **in that** on the back of the hole pattern strips (60), an LED strip (62) is respectively arranged, in particular is stuck on or disposed in a C-groove (63) of the hole pattern strip (60).

3. The frame construction as claimed in claim 1 or 2, **characterized in that** the hole pattern strips (60) have holes (61) at equidistant intervals.

4. The frame construction as claimed in one of the preceding claims, **characterized in that** the hole pattern strips (60) are respectively shorter than the hollow profiled column elements (10) by approximately the height of the topmost crossbeam (3₂).

5. The frame construction as claimed in one of the preceding claims, **characterized in that** at least the bottommost and the topmost crossbeam (3₁, 3₂) are fixedly connected at the columns (2).

6. The frame construction as claimed in one of the preceding claims, **characterized in that** a middle crossbeam (3₃) is held hanging from the columns (2).

7. The frame construction as claimed in one of the preceding claims, **characterized in that** the inner connector part (31) is fastened to the end face of the hollow profiled crossbeam element (20) by means of a screw (33) screwed into a screw channel (21) of the hollow profiled crossbeam element (20).

8. The frame construction as claimed in one of the preceding claims, **characterized in that** the two connector parts (31, 32) each have a tightening contour (37, 46) running obliquely to the plug-in direction in order to mutually tighten the plugged together connector parts (31, 32) transversely to the plug-in direction.

9. The frame construction as claimed in one of the preceding claims, **characterized in that** a tension bolt (51) is stuck through the two connector parts (31, 32) into a longitudinal channel (22) of the hollow profiled crossbeam element (20) and bears against the outside of the outer connector part (32) with a bolt head, which respectively back-grips a longitudinal shoulder (14), arranged ahead of the two longitudinal ribs (13), of the hollow profiled column element (10) and, by means of an, in particular screwed-in, clamping element (56), running transversely in the hollow profiled crossbeam element (20), can be drawn further into the longitudinal channel (22) in order to clamp the crossbeam (3₁, 3₂) to the respective column (2).

10. The frame construction as claimed in claim 9, **characterized in that** the clamping element (56) engages in a transverse bore (53) of the tension bolt (51), and **in that** the clamping element (56) and/or the transverse bore (53) are configured obliquely to one another in such a way that, upon engagement, the tension bolt (51) is centered on the clamping element (56) and thereby tightened.

11. The frame construction as claimed in one of the preceding claims, **characterized in that** the crossbeam connectors (30) have interface holes (39, 48) for transversely running fastening elements of attachment elements.

12. The frame construction as claimed in one of the preceding claims, **characterized in that** the hollow profiled column elements (10) and/or the hollow profiled crossbeam elements (20) are extruded profiles, in particular of metal.

13. The frame construction as claimed in one of the preceding claims, **characterized in that** the crossbeam connectors (30) are formed of plastic.

## Revendications

1. Structure d'encadrement (1) notamment dévolue à un système de rayonnage, comprenant :
- deux colonnes (2) notamment verticales, revêtant respectivement la forme d'un profilé creux (10) notamment rectangulaire, muni d'une rainure longitudinale (11) dont les deux ailes (12) opposées l'une à l'autre sont intérieurement pourvues, à chaque fois, de deux nervures longitudinales (13) entre lesquelles une barrette (60) à trame perforée est insérée dans ledit profilé creux (10) des colonnes, et
- plusieurs traverses (3₁, 3₂, 3₃) notamment horizontales, fixées aux deux colonnes (2) et revêtant, à chaque fois, la forme d'un profilé creux (20) notamment rectangulaire, aux faces extrêmes respectives duquel est fixé un élément (30) de liaison desdites traverses,
sachant que les éléments (30) de liaison des traverses sont respectivement constitués de deux parties matérialisées par des parties de liaison (31, 32) intérieure et extérieure, la partie intérieure de liaison (31) étant fixée frontalement au profilé creux (20) desdites traverses et étant emboîtée, notamment accrochée dans la partie extérieure de liaison (32), et ladite partie extérieure de liaison (32) pénétrant, par au moins un tenon (42), dans l'un des trous (61) des barrettes (60) à trame perforée, et
sachant que les deux ailes (12) de la rainure du profilé creux (10) des colonnes, et la partie extérieure de liaison (32), sont respectivement dotées d'un profil de clipsage (15, 46, 47) à coopération mutuelle, affecté à l'insertion clipsée de ladite partie extérieure de liaison (32) dans la rainure longitudinale (11), et/ou au coulissement de ladite partie extérieure de liaison (32) le long de ladite rainure longitudinale (11).

2. Structure d'encadrement selon la revendication 1, **caractérisée par le fait que** les barrettes (60) à trame perforée consistent en un matériau translucide, notamment en une matière plastique ; et **par le fait qu'**un ruban (62) à diodes électroluminescentes est respectivement disposé, notamment collé à la face postérieure desdites barrettes (60) à trame perforée, ou est logé dans une rainure en C (63) de la barrette (60) à trame perforée.

3. Structure d'encadrement selon la revendication 1 ou 2, **caractérisée par le fait que** les barrettes (60) à trame perforée comportent des trous (61) pratiqués à équidistance.

4. Structure d'encadrement selon l'une des revendications précédentes, **caractérisée par le fait que** les barrettes (60) à trame perforée sont plus courtes que les profilés creux (10) des colonnes, d'une valeur représentant, à chaque fois, sensiblement la hauteur de la traverse (3₂) supérieure extrême.

5. Structure d'encadrement selon l'une des revendications précédentes, **caractérisée par le fait qu'**au moins les traverses (3₁, 3₂) inférieure extrême, et supérieure extrême, sont reliées rigidement aux colonnes (2).

6. Structure d'encadrement selon l'une des revendications précédentes, **caractérisée par le fait qu'**une traverse médiane (3₃) est retenue en suspension sur les colonnes (2).

7. Structure d'encadrement selon l'une des revendications précédentes, **caractérisée par le fait que** la partie intérieure de liaison (31) est fixée frontalement au profilé creux (20) des traverses, au moyen d'une vis (33) vissée dans un canal de vissage (21) dudit profilé creux (20) des traverses.

8. Structure d'encadrement selon l'une des revendications précédentes, **caractérisée par le fait que** les deux parties de liaison (31, 32) sont respectivement pourvues d'un profil de blocage (37, 46) s'étendant à l'oblique par rapport à la direction d'emboîtement afin de bloquer l'une contre l'autre lesdites parties de liaison (31, 32), emboîtées l'une dans l'autre, transversalement par rapport à ladite direction d'emboîtement.

9. Structure d'encadrement selon l'une des revendications précédentes, **caractérisée par le fait qu'**un boulon de blocage (51) est enfiché dans un canal longitudinal (22) du profilé creux (20) des traverses, en franchissant de part en part les deux parties de liaison (31, 32), et est extérieurement en applique, contre la partie extérieure de liaison (32), par une tête qui vient respectivement en prise par-derrière avec un épaulement longitudinal (14) du profilé creux (10) des colonnes, situé en amont des deux nervures longitudinales (13), et peut être insérée plus avant dans ledit canal longitudinal (22) au moyen d'un élément de serrage (56) s'étendant transversalement dans ledit profilé creux (20) des traverses, dans lequel il est notamment vissé, de manière à bloquer la traverse (3₁, 3₂) sur la colonne (2) considérée.

10. Structure d'encadrement selon la revendication 9, **caractérisée par le fait que** l'élément de serrage (56) pénètre dans un alésage transversal (53) du boulon de blocage (51) ; et **par le fait que** ledit élément de serrage (56) et/ou ledit alésage transversal (53) est (sont) conçu(s) avec obliquité mutuelle de telle sorte que, lors de la pénétration, ledit boulon de blocage (51) soit centré sur ledit élément de serrage (56), et soit ainsi bloqué.

11. Structure d'encadrement selon l'une des revendications précédentes, **caractérisée par le fait que** les éléments (30) de liaison des traverses comportent des trous d'interfaces (39, 48) destinés à des éléments de fixation d'éléments rapportés, s'étendant transversalement.

12. Structure d'encadrement selon l'une des revendications précédentes, **caractérisée par le fait que** les profilés creux (10) des colonnes et/ou les profilés creux (20) des traverses sont des profilés venus d'extrusion, notamment en métal.

13. Structure d'encadrement selon l'une des revendications précédentes, **caractérisée par le fait que** les éléments (30) de liaison des traverses sont constitués d'une matière plastique.
